Europäisches Patentamt

(19) European Patent Office

Office européen des brevets

(11) **EP 0 567 136 B1**

(12) **EUROPEAN PATENT SPECIFICATION**

(45) Date of publication and mention
of the grant of the patent:
**01.04.1998 Bulletin 1998/14**

(51) Int. Cl.$^6$: **C04B 35/48**, C09K 3/14

(21) Application number: **93106582.5**

(22) Date of filing: **22.04.1993**

(54) **Mill parts**

Zerkleinerungselemente

Eléments pour broyeur

(84) Designated Contracting States:
**DE FR GB**

(30) Priority: **23.04.1992 JP 104727/92**

(43) Date of publication of application:
**27.10.1993 Bulletin 1993/43**

(73) Proprietor: **NIKKATO CORP.**
**Sakai-shi, Osaka-fu 590 (JP)**

(72) Inventors:
• **Ohnishi, Hiroshi**
**Sakai-shi, Osaka-fu (JP)**
• **Inui, Kazuyo**
**Sakai-shi, Osaka-fu (JP)**
• **Kawanami, Toshio**
**Sakai-shi, Osaka-fu (JP)**

(74) Representative:
**VOSSIUS & PARTNER**
**Postfach 86 07 67**
**81634 München (DE)**

(56) References cited:
**EP-A- 0 218 853**     **EP-A- 0 294 844**
**US-A- 4 430 279**     **US-A- 4 690 910**

• **DATABASE WPI Week 8310, Derwent**
**Publications Ltd., London, GB; AN 83-23662K**
• **Journal of Material Science 20 (1985) 1178-1184**

<u>Remarks:</u>
The file contains technical information submitted
after the application was filed and not included in
this specification

## Description

The present invention relates to a mill part comprising a sintered zirconia body.

The mills used today include the ball mill, sand mill, attrition mill, vibrating ball mill and so forth. The parts of these mills, inclusive of the internal lining and balls or equivalents, are generally made of a metal, resin, rubber or ceramic material but since these materials are liable to wear, ground products tend to be contaminated with traces of worn materials and the attrition of the parts is also significant. Particularly as far as the production of electronic parts, which has been rapidly increasing in recent years, are concerned, impurities mixed into ground powders as worn materials, even in trace amounts, exert unnegligible influences on the physicoelectrical properties of the final parts. Therefore, the development of higher wear-resistant mill parts has been earnestly awaited.

Recently mill parts made of zirconia have been proposed (e.g. Japanese Unexamined Patent Publication No. 15079/1983) and are finding application.

In this respect US-A-4,690,910 shows a sintered zirconia product containing 12 to 14 mol% of $CeO_2$ and a sintered zirconia product containing 8 to 10 mol% of $CeO_2$ and 1 to 2 mol% of $Y_2O_3$.

EP-A-0 294 844 discloses a sintered zirconia product having high toughness and containing 0.1 to 3 mol% $Nd_2O_3$ and $Y_2O_3$ as stabilizer.

EP-A-0 218 853 relates to sintered zirconia material comprising a sintered material containing at least 50 mol% zirconia having a tetragonal crystal structure. But a further improvement in wear resistance is still being looked after.

Therefore, the primary object of the present invention is to provide a mill part which is further lessened in the drawbacks of the conventional mill parts and is conductive to a further reduction in the degree of abrasion-related contamination.

This object has been achieved by the surprising finding that a sintered zirconia body containing a specified proportion of $Y_2O_3$ as a stabilizer and controlled to specified values for such parameters as average grain size, bulk density, crystal phase and physical properties provides mill parts of remarkably improved wear resistance.

The present invention is therefore directed to the following mill parts :

A mill part comprising a sintered zirconia body meeting the following requirements, viz.

(1) only $Y_2O_3$ being contained as a stabilizer in an amount of 1.0-4.5 mol%,
(2) an average grain size of not greater than 2 $\mu$m,
(3) a bulk density of not less than 5.8 g/cm$^3$,
(4) a tetragonal phase zirconia content of not less than 40 volume %, and a monoclinic phase zirconia content of not larger than 5 volume %
(5) a toughness value of not less than 4.5 MPam$^{1/2}$,
(6) a strength value of not less than 60 kgf/mm$^2$, and
(7) said average grain size ($\mu$m), toughness (MPam$^{1/2}$) and strength (kgf/mm$^2$) values satisfying the following relation:

$$(Average\ grain\ size)^{1.4} \times (Toughness)^{-2.7} \times (Strength)^{-2.7} \leq 1 \times 10^{-7}.$$

Moreover, the present invention is directed to the use of $Y_2O_3$ as a stabilizer in a mill part. The present invention is also directed to the use of a sintered zirconia body as a mill part.

The requirements that must be met for purposes of the present invention are now described in further detail.

(a) The $Y_2O_3$ content of the sintered zirconia body is within the range of 1.0 to 4.5 mol%.

In order that a sintered zirconia body may exhibit the necessary wear resistance as a wear-resistant material, its $Y_2O_3$ content must be within the range of 1.0 to 4.5 mol%. When the $Y_2O_3$ content is less than 1.0 mol%, not only the volume of monoclinic phase is increased but the mechanical properties of the sintered zirconia body are degraded relatively. As a consequence, the wear resistance of the mill part made of such material is not as high as practically useful. On the other hand, when the $Y_2O_3$ content exceeds 4.5 mol%, the volume of cubic phase is increased and the average grain size of the sintered body becomes larger. As a result, the wear resistance of the mill part is decreased.

The sintered zirconia body of the present invention may further contain at least one species selected from MgO, CaO and rare earth element oxides. Among the rare earth element oxides that can be used are oxides derived from compounds of the elements having atomic numbers from 57 to 71. When any of MgO, CaO and rare earth element oxides is added, the proportion of $Y_2O_3$ content can be decreased within the above range to reduce the production cost. Moreover, these oxides may improve toughness. The level of addition of these oxides can be selected in such a manner that the specified volume of the tetragonal phase will be formed in the sintered body. Generally, the content of such oxide or oxides in the sintered zirconia body may be about 6 mol% at the maximum.

(b) The average grain size of the sintered zirconia body is not greater than 2 μm.

Generally, the larger the grain size, the higher is the wear loss due to granular abrasion. When the average grain size exceeds 2 μm, the stability of the tetragonal phase is adversely affected and a transformation from such phase to monoclinic phase by stress-induced corrosion tends to take place in repeated use. The increased volume of monoclinic phase causes microcracks in the sintered body, so that not only the wear loss originated from such cracks is accelerated but the wear resistance of the sintered body is decreased. Thus, troubles such as cracking tend to occur easily. The average grain size of the sintered zirconia body is preferably not larger than 1 μm.

The average grain size is measured as follows. The surface of the sintered body is polished mirror-smooth and treated by the thermal or chemical etching. Then, the etched surface is examined with a scanning electron microscope and the average value for 10 points is calculated by the intercept method. The calculating equation is $D=1.5 \times n/L$, where L means the measuring length, D means the average grain size, and n means the number of grains per L.

(c) The bulk density of the sintered body is not less than 5.8 $g/cm^3$.

When the bulk density is less than 5.8 $g/cm^3$, many pores are formed in the sintered body and accelerated wear loss arises from the pores serving as points of origin to undesirably decrease the impact strength of the mill part. More preferably, the bulk density is not less than 5.85 $g/cm^3$.

(d) The sintered body contains not less than 40 volume % of tetragonal phase zirconia.

When the tetragonal phase zirconia content is less than 40%, the effect of stress-induced phase transformation from the tetragonal phase to the monoclinic phase is decreased to reduce toughness and consequently stress loading tends to cause microcracks, thus decreasing wear resistance and impact strength.

Furthermore, when the tetragonal phase zirconia content is low, the cubic phase zirconia is increased relatively and the average grain size becomes larger. For this reason, too, the wear resistance and impact strength of the sintered body are decreased.

In the present invention, monoclinic phase zirconia is present up to 5 volume %.

The presence or absence of monoclinic phase zirconia (M) and the amounts of tetragonal phase zirconia (T) and cubic phase zirconia (C) were identified by X-ray diffraction analysis. Thus, on the surface of a sintered body and of a product made thereof, the tetragonal phase transforms to the monoclinic phase by the stress-induced transformation and, therefore, it is difficult to identify the true crystal structure. For this reason, the surface of the sintered body was polished mirror-smooth and X-ray diffraction analysis was carried out at the defraction angle range of 27-34°. The presence or absence and the amount of monoclinic phase zirconia was identified from the heights of the diffraction peaks (111) and $(11\bar{1})$ of monoclinic phase zirconia and the diffraction peaks (111) of tetragonal phase zirconia and cubic phase zirconia by means of the following equation.

$$M = [I_{M(111)} + I_{M(11\bar{1})}] / [I_{M(111)} + I_{M(11\bar{1})} + I_{C+T(111)}] \times 100 \text{ (volume \%)}$$

Similarly, the volume of tetragonal phase zirconia (T) and cubic phase zirconia (C) were identified in the defraction angle range of 70-77° and calculated from the heights of cubic phase zirconia diffraction peak (400) and tetragonal phase zirconia diffraction peaks (400) and (004) by means of the following equation.

$$C = [I_{C+T(111)} / [I_{M(111)} + I_{M(11\bar{1})} + I_{C+T(111)}]] \times [I_{C(400)} / [I_{C(400)} + I_{T(400)} + I_{T(004)}]] \times 100 \text{ (volume \%)}$$

$$T = 100 - M - C \text{ (volume \%)}$$

(e) The average grain size (μm), toughness ($MPam^{1/2}$) and strength ($kgf/mm^2$) of the sintered body satisfy the following relation.

$$(\text{Average grain size})^{1.4} \times (\text{Toughness})^{-2.7} \times (\text{Strength})^{-2.7} \leq 1 \times 10^{-7}$$

The investigations made by the inventor of the present invention revealed that for use as the high-speed, high-load crushing media and internal lining of a medium-stirring type mill or the like, it is not only necessary that the sintered zirconia body meet certain specific parameter values for grain size, bulk density and crystal phase structure but it is essential that the average grain size (μm), toughness ($MPam^{1/2}$) and strength ($kgf/mm^2$) satisfy the specific relation shown above. In other words, it is not sufficient that said parameter values are independently excellent but they must satisfy the above relation. Thus, grain size which represents grain volume is associated with wear by granular abrasion and further with stress corrosion. Toughness is a measure of resistance to the initiation and propagation of cracks, while strength is indicative of the size and amount of defects which are rate determining factors in wear. Therefore, how excellent any one or two parameter terms of the above relation may be, no effective inhibition of wear can be expected when the total value exceeds $1 \times 10^{-7}$. The value of the above relation is preferably not greater than $5 \times 10^{-8}$.

The requirement as to average grain size of the sintered body was as mentioned above. The toughness of the sintered body must be not less than 4.5 $MPam^{1/2}$. The strength of the sintered body, in the form of a ball, must be not less than 60 $kgf/mm^2$.

As far as the disclosure in this specification is concerned, toughness was measured under a load of 30 kgf using a sintered body specimen mirror-finished by the IF method in accordance with JIS 1607.

As to strength, when the mill part according to the invention was spherical in shape, each specimen sandwiched between two WC plates was set on the testing machine and loaded at a crosshead speed of 0.5 mm/min. and the load (W) at a final fracture of the specimen was determined. This load value was divided by the sectional area (A) of the specimen and the resultant quotient (W/A) was used as the strength value. When the mill part was other than spherical, a specimen of the shape specified in JIS 1601 was cut out from the sintered body and its strength was measured in accordance with the above JIS method except for size of specimen.

Mill parts according to the present invention can be manufactured by various techniques. The following is an example. An aqueous solution of a zirconium compound (e.g. zirconyl oxychloride) and a solution of an yttrium compound (e.g. yttrium chloride) are evenly mixed in proportions such that 1.0 to 4.5 mol% of $Y_2O_3$ will be incorporated in $ZrO_2$. The mixture is then dehydrated, dried and calcined at 400-1200°C. This product is ground to provide a primary particle $ZrO_2$ powder having an average grain size of not more than 0.5 $\mu$m. When at least one of MgO, CaO and rare earth element oxides is to be incorporated in $ZrO_2$, an aqueous solution containing at least one of Mg, Ca and rare earth element is added in a necessary amount. As a sintering aid, $Al_2O_3$ may be added. The level of addition of $A\ell_2O_3$ is determined so that the $A\ell_2O_3$ content of the sintered body will not exceed 15 volume %. Then, the above primary particle $ZrO_2$ powder is dispersed by wet grinding and, after addition of the known binder (a wax emulsion, PVA, CMC, etc.), the dispersed powder is formed by using known ceramic forming techniques. Small balls can also be prepared by the known tumbler granulation method, alkoxide method or hydrolysis-in-liquid method. The formed body is then sintered at a temperature of about 1200 to 1600°C to provide a sintered mill part. Sintering may be carried out by the pressureless sintering method but HIP sintering is preferred.

The sintered product thus obtained is further processed, where necessary, for example by machining, grinding, buffing, etc. to provide a final product.

The term 'mill part' as used throughout this specification and appended claims means any and all of the parts which are brought into contact with solid materials in the machines, jigs or equipment used in the grinding, dispersing, breaking or comminuting of solid materials, whether under a dry or wet condition. The term "mill" means a crushing or milling machine but, in a broader sense, means any of dispersing machines, classifiers, blenders, granulators, sifters, mixers, dryers, conveying machines and so on. Examples of the 'mill part' include various media for crushing or dispersing, internal linings, vessels for use in milling, rolls, agitator pins, arms and so on.

For these parts, the sintered zirconia body can be used just as fired but since monoclinic and cubic phase may at times have precipitated on the sintered surface due to contamination in the process of sintering, it is preferable, for reducing initial wear, that the surface of the sintered body as fired be finished by polishing, grinding or the like beforehand. However, when the crystal phase structure of the sintered body itself meet the requirements defined and measured under the conditions set forth in this specification, the presence of monoclinic and/or cubic phase on the surface of the mill part is allowed. This is because while such crystal phases remain in recesses of the sintered surface or the stress-induced transformation from tetragonal to monoclinic phase may occur in the process of polishing or grinding, the presence of such phases is only limited to a very superficial part of the sintered surface. The permissible amount of surface monoclinic phase as identified by X-ray diffraction analysis is 15 mol% at the maximum.

The mill part comprising the above-specified sintered zirconia body according to the present invention exhibits the following desirable performance characteristics.

(a) Since the mill part is excellent in strength, toughness and impact strength, its wear resistance is very high even under high-load operating conditions.
(b) Since its modulus of elasticity is low as compared with alumina etc., the mill part is less liable to damage the other parts coming into contact therewith.
(c) Since the mill part has high wear resistance, the ground powder would not be contaminated. Moreover, should such contamination occur, the extreme fineness of the contaminants would not appreciably affect the uniformity of ground powders.

The following examples are intended to point out the features of the present invention with greater clarity.

## Example 1

Zirconyl oxychloride of 99.5% purity and yttrium nitrate of 99.9% purity were blended in aqueous solution in the proportions indicated in Table 1. When any component other than $Y_2O_3$ was to be incorporated, an aqueous solution of its nitrate was further added. The solution thus prepared was subjected to hydrolysis with heating under the reflux condition to cause precipitation of hydrated zirconia including $Y_2O_3$ (and MgO or CaO or a rare earth element oxide) as a solid solution. The precipitate was then dehydrated, dried and calcined at 1000°C for 1 hour. The resulting powder was washed and ground to a specific surface area of $10m^2/g$. Thereafter, 2% of an acrylate resin binder was added and the mixture was dried and granulated to provide a forming powder having an average grain size of 80 $\mu$m.

This powder was formed by CIP at 1000 kgf/cm$^2$, heated at 1350 to 1600°C and allowed to cool to obtain a sintered product in the form of balls 5 mm in diameter. The balls were finished by barrel grinding and used as specimens for evaluation. The crystal phases of such balls are also shown in Table 1. The characteristics of the balls are presented in Table 2.

In Tables 1 and 2, specimens 1 through 6 are sintered bodies according to the invention, while specimens 7 through 10 are control sintered bodies not meeting at least one of the requirements defined by the present invention.

Table 1

| Specimen No. | $Y_2O_3$ (Mol%) | Other oxide (Mol%) | Crystal phase (vol %) | | |
|---|---|---|---|---|---|
| | | | Monoclinic | Tetragonal | Cubic |
| 1 | 2.0 | - | 2 | 98 | 0 |
| 2 | 2.5 | - | 0 | 97 | 3 |
| 3 | 1.5 | MgO:4 | 4 | 55 | 41 |
| 4 | 3.5 | - | 0 | 80 | 20 |
| 5 | 2.8 | - | 0 | 93 | 7 |
| 6 | 1.5 | CaO:5 | 0 | 45 | 55 |
| 7 | 4.8 | - | 0 | 35 | 65 |
| 8 | 3.0 | - | 3 | 85 | 12 |
| 9 | 0.5 | $CeO_2$:10 | 10 | 40 | 50 |
| 10 | 3.0 | - | 0 | 88 | 12 |

Table 2

| Specimen No. | Average grain size (μm) | Bulk density (g/cm$^3$) | Strength (kgf/mm$^2$) | Toughness (MPa m$^{1/2}$) | Relation value |
|---|---|---|---|---|---|
| 1 | 0.35 | 6.05 | 120 | 6.5 | $3.6 \times 10^{-9}$ |
| 2 | 0.40 | 6.07 | 100 | 6.0 | $8.7 \times 10^{-9}$ |
| 3 | 0.82 | 5.93 | 65 | 5.5 | $9.7 \times 10^{-8}$ |
| 4 | 0.81 | 6.00 | 70 | 5.0 | $1.0 \times 10^{-7}$ |
| 5 | 0.50 | 6.06 | 95 | 5.6 | $1.7 \times 10^{-8}$ |
| 6 | 0.71 | 5.90 | 60 | 5.8 | $8.3 \times 10^{-8}$ |
| 7 | 2.80 | 5.95 | 58 | 4.4 | $1.3 \times 10^{-6}$ |
| 8 | 2.50 | 5.98 | 68 | 6.1 | $3.1 \times 10^{-7}$ |
| 9 | 1.70 | 5.73 | 58 | 5.0 | $4.7 \times 10^{-7}$ |
| 10 | 0.50 | 5.74 | 55 | 4.5 | $1.3 \times 10^{-7}$ |

Note:     'Relation value' means the value of the

following equation.

(Average grain size)$^{1.4}$ x (Toughness)$^{-2.7}$ x

(Strength)$^{-2.7}$

Then, an attrition mill of 650 ml capacity was charged with 400 mℓ of the above test balls and 300 mℓ of water and operated at an arm speed of 400 rpm for 100 hours to determine the wear rate of the balls. The results are presented in Table 3. The wear rate was calculated by dividing the difference between the weight of balls before the test and that after the test by the weight of balls before the test and converting the quotient to the weight change per unit operating time.

Table 3

| Specimen No. | Rate of wear (ppm/hr) |
|---|---|
| 1 | 0.25 |
| 2 | 0.29 |
| 3 | 0.98 |
| 4 | 1.00 |
| 5 | 0.35 |
| 6 | 0.87 |
| 7 | 10.50 |
| 8 | 3.80 |
| 9 | 5.10 |
| 10 | 2.00 |

It is seen from Table 3 that the balls according to the present invention (Specimen Nos. 1-6) are remarkably high in wear resistance with wear rate values of less than 1 ppm/hr.

**Claims**

1.  A mill part comprising a sintered zirconia body meeting the following requirements:

    (1) only $Y_2O_3$ being contained as a stabilizer in an amount of 1.0 to 4.5 mol%,
    (2) an average grain size of not greater than 2 μm,
    (3) a bulk density of not less than 5.8 g/cm$^3$,
    (4) a tetragonal phase zirconia content of not less than 40 volume %, and a monoclinic phase zirconia content of not larger than 5 volume %
    (5) a toughness value of not less than 4.5 MPam$^{1/2}$,
    (6) a strength value of not less than 60 kgf/mm$^2$, and
    (7) said average grain size (μm), toughness (MPam$^{1/2}$) and strength (kgf/mm$^2$) values satisfying the following relation.

    (Average grain size)$^{1.4}$ x (Toughness)$^{-2.7}$ x (Strength)$^{-2.7}$≤1 x 10$^{-7}$

2.  Use of $Y_2O_3$ as a stabilizer in a mill part comprising a sintered zirconia body meeting the following requirements:

(1) a $Y_2O_3$ content of 1.0 to 4.5 mol%,

(2) an average grain size of not greater than 2 $\mu$m,

(3) a bulk density of not less than 5.8 g/cm$^3$,

(4) a tetragonal phase zirconia content of not less than 40 volume %, and a monoclinic phase zirconia content of not larger than 5 volume %

(5) a toughness value of not less than 4.5 MPam$^{1/2}$,

(6) a strength value of not less than 60 kgf/mm$^2$, and

(7) said average grain size ($\mu$m), toughness (MPam$^{1/2}$) and strength (kgf/mm$^2$) values satisfying the following relation.

$$(\text{Average grain size})^{1.4} \times (\text{Toughness})^{-2.7} \times (\text{Strength})^{-2.7} \leq 1 \times 10^{-7}$$

## Patentansprüche

1. Mühlenbauteil, umfassend einen gesinterten Zirconiumdioxidkörper, der den folgenden Anforderungen genügt:

(1) es ist lediglich $Y_2O_3$ als ein Stabilisator in einer Menge von 1,0 bis 4,5 Mol-% enthalten,

(2) eine mittlere Korngröße von nicht mehr als 2 $\mu$m,

(3) eine Schüttdichte von nicht weniger als 5,8 g/cm$^3$,

(4) ein Gehalt an Zirconiumdioxid mit tetragonaler Phase von nicht weniger als 40 Volumen-%, und ein Gehalt an Zirconiumdioxid mit monokliner Phase von nicht mehr als 5 Volumen-%,

(5) ein Zähigkeitswert von nicht weniger als 4,5 MPam$^{1/2}$,

(6) ein Festigkeitswert von nicht weniger als 60 kgf/mm$^2$, und

(7) die Werte der mittleren Korngröße ($\mu$m), der Zähigkeit (MPam$^{1/2}$) und Festigkeit (kgf/mm$^2$) genügen folgender Beziehung:

$$(\text{mittlere Korngröße})^{1,4} \times (\text{Zähigkeit})^{-2,7} \times (\text{Festigkeit})^{-2,7} \leq 1 \times 10^{-7}.$$

2. Verwendung von $Y_2O_3$ als ein Stabilisator in einem Mühlenbauteil, umfassend einen gesinterten Zirconiumdioxidkörper, der den folgenden Anforderungen genügt:

(1) ein Gehalt an $Y_2O_3$ von 1,0 bis 4,5 Mol-%,

(2) eine mittlere Korngröße von nicht mehr als 2 $\mu$m,

(3) eine Schüttdichte von nicht weniger als 5,8 g/cm$^3$,

(4) ein Gehalt an Zirconiumdioxid mit tetragonaler Phase von nicht weniger als 40 Volumen-%, und ein Gehalt an Zirconiumdioxid mit monokliner Phase von nicht mehr als 5 Volumen-%,

(5) ein Zähigkeitswert von nicht weniger als 4,5 MPam$^{1/2}$,

(6) ein Festigkeitswert von nicht weniger als 60 kgf/mm$^2$, und

(7) die Werte der mittleren Korngröße ($\mu$m), der Zähigkeit (MPam$^{1/2}$) und Festigkeit (kgf/mm$^2$) genügen folgender Beziehung:

$$(\text{mittlere Korngröße})^{1,4} \times (\text{Zähigkeit})^{-2,7} \times (\text{Festigkeit})^{-2,7} \leq 1 \times 10^{-7}.$$

## Revendications

1. Pièce de broyeur comprenant un corps fritté de zircone satisfaisant aux exigences suivantes :

(1) seul de l'$Y_2O_3$ est contenu en tant que stabilisant en une quantité de 1,0 à 4,5 moles %,

(2) une dimension moyenne des grains qui n'est pas supérieure à 2 $\mu$m,

(3) une densité apparente qui n'est pas inférieure à 5,8 g/cm$^3$,

(4) une teneur en zircone en phase tétragonale qui n'est pas inférieure à 40% en volume et une teneur en zircone en phase monoclinique qui n'est pas supérieure à 5% en volume,

(5) une valeur de ténacité qui n'est pas inférieure à 4,5 MPam$^{1/2}$,

(6) une valeur de résistance mécanique qui n'est pas inférieure à 60 kgf/mm$^2$ et

(7) lesdites valeurs de dimension moyenne des grains ($\mu$m), de ténacité (MPam$^{1/2}$) et de résistance mécanique (kgf/mm$^2$) satisfaisant à la relation suivante :

$$(\text{dimension moyenne des grains})^{1,4} \times (\text{ténacité})^{-2,7} \times (\text{résistance mécanique})^{-2,7} \leq 1 \times 10^{-7}.$$

**2.** Utilisation d'$Y_2O_3$ en tant que stabilisant dans une pièce de broyeur comprenant un corps fritté de zircone qui satisfait aux exigences suivantes:

(1) une teneur en $Y_2O_3$ de 1,0 à 4,5 moles %,

(2) une dimension moyenne de grain qui n'est pas supérieure à 2 $\mu$m,

(3) une densité apparente qui n'est pas inférieure à 5,8 g/cm$^3$,

(4) une teneur en zircone en phase tétragonale qui n'est pas inférieure à 40% en volume et une teneur en zircone en phase monoclinique qui n'est pas supérieure à 5% en volume,

(5) une valeur de ténacité qui n'est pas inférieure à 4,5 MPam$^{1/2}$,

(6) une valeur de résistance mécanique qui n'est pas inférieure à 60 kgf/mm$^2$ et

(7) lesdites valeurs de dimension moyenne de grain ($\mu$m), de ténacité (MPam$^{1/2}$) et de résistance mécanique (kgf/mm$^2$) satisfaisant à la relation suivante:

(dimension moyenne du grain)$^{1,4}$ x (ténacité)$^{-2,7}$ x (résistance mécanique)$^{-2,7}$ $\leq$1 x 10$^{-7}$.